# FASCICULE DE BREVET EUROPEEN

(11) **EP 0 647 004 B1**
(45) Date de publication et mention de la délivrance du brevet: **10.12.1997**
(21) Numéro de dépôt: 94410081.7
(22) Date de dépôt: 26.09.1994
(51) Int. Cl.: H02G 3/08, H02G 3/14

(54) **Boîtier pour équipement électrique**
Gehäuse für elektrische Einrichtung
Electrical equipment housing

(30) Priorité: 01.10.1993 FR 9311887
(43) Date de publication de la demande: 05.04.1995
(73) Titulaire: SCHNEIDER ELECTRIC SA, 92100 Boulogne Billancourt (FR)
(72) Inventeur: Meyer, Jean-Claude, F-38050 Grenoble Cédex 09 (FR); Larsky, Pierre, F-38050 Grenoble Cédex 09 (FR); Buchy, Bernard, F-38050 Grenoble Cédex 09 (FR); Lutz, Benoît, F-38050 Grenoble Cédex 09 (FR); Stasi, Jean-Louis, F-38050 Grenoble Cédex 09 (FR); Bricker, Patrick, F-38050 Grenoble Cédex 09 (FR); Munsch, Richard, F-38050 Grenoble Cédex 09 (FR)
(74) Mandataire: Hecké, Gérard

(56) Documents cités:
- WO-A-91/07794
- DE-B- 1 194 476
- DE-U- 7 136 426
- FR-A- 2 406 327
- US-A- 5 134 250

## Description

La présente invention concerne un boîtier étanche pour une boîte de dérivation, ayant un corps équipé d'un fond, de parois latérales et d'un couvercle, lesdits couvercle et parois latérales étant équipés d'un dispositif d'emboîtement agencé pour permettre d'assembler le couvercle et le corps, et comportant :
- une gorge périphérique ménagée dans un rebord du couvercle entre une première languette intérieure et une deuxième languette extérieure élastique,
- un bord solidaire des parois latérales, et destiné à être engagé dans ladite gorge, l'extrémité dudit bord possèdant une zone de moindre épaisseur ayant une partie frontale conformée en coin,
- et des moyens d'accouplement élastiques.

On connaît déjà des boîtiers de ce type destinés à servir de boîtes de dérivation ou à contenir des appareillages électriques ou similaires. Certains de ces boîtiers ont des couvercles à fixer par des vis, d'autres à emboîter. Pour ces derniers, le couvercle ou le corps présente habituellement une gorge périphérique qui s'emboîte sur le bord supérieur des parois latérales du corps du boîtier. Une réalisation de ce type est par exemple décrite dans le document DE-A-1194476 publiée après examen et dans le modèle d'utilité allemand N° 71 36426.

Dans le boîtier décrit par le modèle d'utilité 71 36426, un bourrelet protubérant, ménagé le long du bord des parois latérales, sert d'appui à une paroi extérieure délimitant la gorge périphérique du couvercle. Dans le boîtier décrit dans le document DE-A-1194476, le couvercle et les parois latérales sont équipés de rebords à profils complémentaires ayant chacun une gorge, ces profils s'emboîtant l'un dans l'autre pour assurer une fermeture étanche du boîtier. Dans les deux cas la zone d'emboîtement du couvercle et du bord des parois latérales présente un rebord ou un bourrelet, c'est-à-dire une protubérance disgracieuse qui risque de gêner une juxtaposition de deux ou plusieurs boîtiers dans un montage électrique.

Le document US-A-5134250 concerne une gaine pour le logement de câbles ou conducteurs électriques, comportant un corps assemblé à un couvercle au moyen d'un dispositif de clipsage, lequel est pourvu de deux languettes solidaires du couvercle, et d'un élément de verrouillage, en forme de flèche, assujetti au corps. Les deux arêtes de la flèche coopèrent avec deux surfaces d'accrochage prévues sur les parois internes des deux languettes pour constituer un dispositif de verrouillage positif double du couvercle. Le dispositif de verrouillage double nécessite un décalage latéral important de l'élément de verrouillage par rapport à la paroi latérale. La section de la languette extérieure est d'autre part plus épaisse que celle de la languette intérieure, entraînant une déformation élastique de cette dernière, alors que la languette extérieure reste coplanaire avec la paroi du corps. Le décalage latéral au niveau de l'élément de verrouillage entraîne une diminution de la largeur utile de tout le demi-volume supérieur du compartiment interne. De plus, l'effet de rigidité de la languette extérieure, et la présence du dispositif de verrrouillage double, ne facilitent pas le démontage du couvercle.

La présente invention se propose de pallier cet inconvénient en réalisant un boîtier dont les faces latérales ne présentent aucune protubérance.

Ce but est atteint par le boîtier selon l'invention, caractérisé en ce que :
- le bord comprend une partie arrière ménageant un dégagement périphérique disposé à la base de ladite partie frontale, et une première face inclinée prenant appui sur une surface inclinée de la deuxième languette élastique, de manière à repousser cette dernière vers l'extérieur lors d'une première phase du mouvement de rapprochement du couvercle et du corps,
- la première languette intérieure comporte une surface inclinée coopérant avec une deuxième face conjuguée de la partie frontale pour assurer un auto-centrage du couvercle au cours d'une deuxième phase du mouvement,
- un bossage est agencé sur la paroi interne de la deuxième languette extérieure pour s'engager dans le dégagement périphérique lors d'une troisième phase du mouvement,
- un évidement intérieur est situé sur la deuxième languette entre le bossage et la gorge, pour recevoir un renflement situé du côté de la première face de la partie frontale en coin, la deuxième languette extérieure et le dégagement périphérique constituant lesdits moyens d'accouplement élastiques,
- et des zones de dégagement agencées aux quatre coins de la languette extérieure .

D'autres caractéristiques et avantages de la présente invention ressortiront plus clairement de la description d'un mode de réalisation préféré donné à titre d'exemple non limitatif et représenté par les dessins annexés dans lesquels:
la figure 1 est une vue en perspective d'un boîtier selon l'invention, le couvercle étant séparé du corps,
la figure 2 est une vue similaire à celle de la figure 1 mais où le couvercle est monté sur le corps,
les figures 3 et 4 sont des vues en élévation du boîtier selon l'invention, l'une représentant le couvercle et le corps non assemblés et l'autre représentant ces éléments montés,
la figure 5 représente une vue partielle en coupe illustrant le couvercle non monté sur le corps,
la figure 6 représente une vue partielle en coupe illustrant le couvercle partiellement engagé sur le corps et,
la figure 7 représente une vue partielle en coupe illustrant le couvercle et le boîtier assemblés.

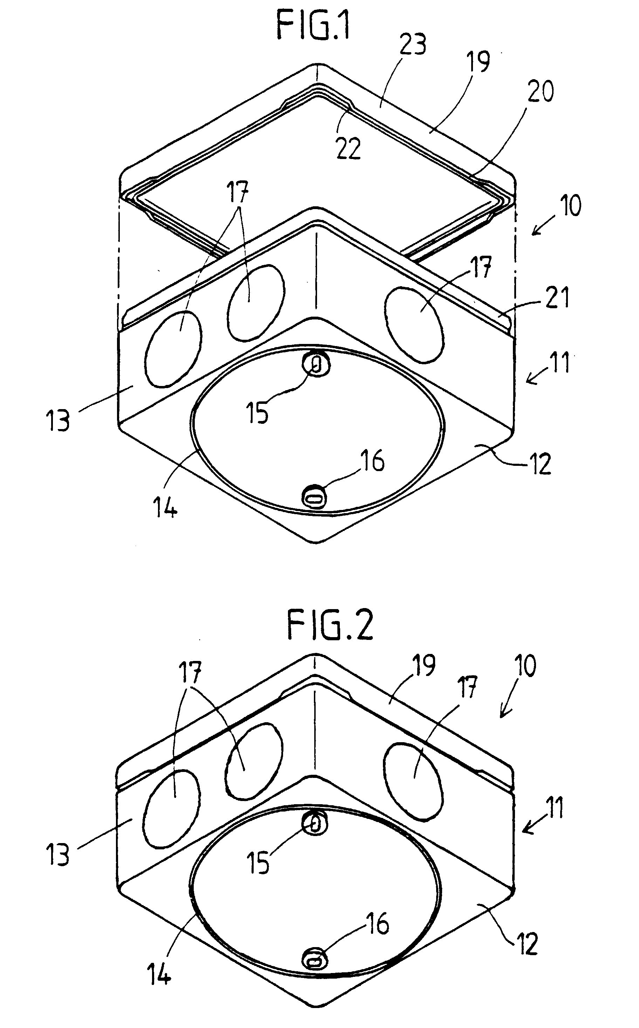

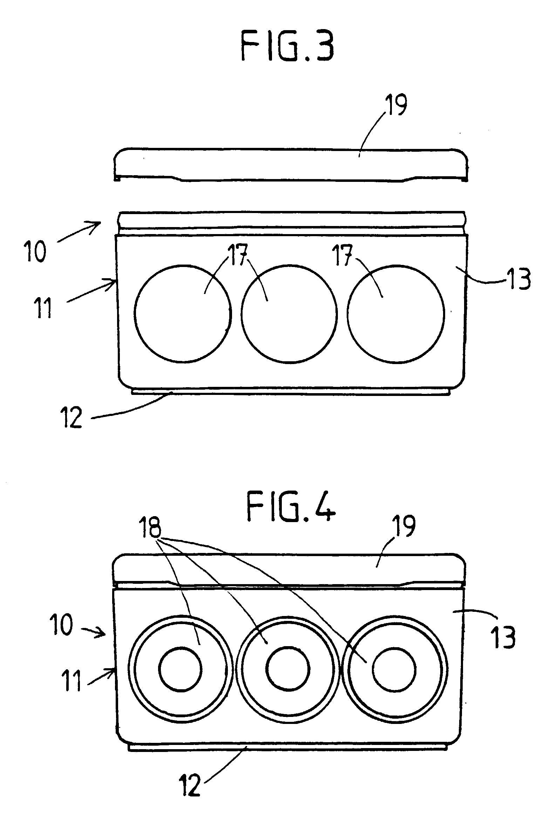

En référence aux figures et notamment aux figures 1 à 4, le boîtier 10, représenté respectivement ouvert et fermé, est destiné à être utilisé comme boîte de dérivation. A cet effet, il comporte un corps 11 pourvu d'un fond 12 et de parois latérales 13. Dans l'exemple décrit, le fond est carré et comporte une nervure circulaire 14 de renfort ainsi que deux ouvertures 15 et 16 diamétralement opposés permettant de fixer la boîte contre une paroi. Ces ouvertures sont oblongues de manière à permettre un ajustage en position de la boîte. Les parois latérales sont pourvues de zones circulaires 17 permettant le raccordement à la boîte des conduits tubulaires rigides ou souples dans lesquels sont passés les fils ou les câbles d'un circuit électrique. Ces zones circulaires 17 peuvent être des ouvertures obturées par des bouchons amovibles en caoutchouc 18 (voir figure 4). Ces bouchons comportent généralement des nervures circulaires concentriques destinées à être prédécoupées pour permettre le raccordement de conduits de diamètres différents. Après découpe d'une partie circulaire centrale la partie annulaire restante constitue un joint élastique étanche entre la boîte et le conduit. Ces zones circulaires 17 peuvent également être des ouvertures surmoulées par un film en élastomère qui peut être aisément percé pour permettre le passage des conduits. Les réalisations sont connues en soi et ne correspondent pas à des caractéristiques essentielles de l'invention.

Le boîtier 10 comporte par ailleurs un couvercle 19, amovible, qui est destiné à s'emboîter sur les parois latérales du corps pour assurer une fermeture étanche de la boîte.

Dans ce but, le couvercle et les parois latérales sont équipés d'un dispositif d'emboîtement se composant au moins d'une gorge périphérique 20 du couvercle 19 et d'un bord 21 des parois latérales agencé pour être engagé dans cette gorge. La gorge périphérique 20 est ménagée dans un rebord du couvercle et est délimitée par deux languettes respectivement intérieure et extérieure 22 et 23 dont l'une au moins, à savoir la languette extérieure 23 est élastique. Le long de sa surface intérieure, cette languette 23 présente un évidement intérieur 24 prolongé par un bossage 25 disposé à proximité de son extrémité libre.

Par ailleurs, le bord 21 définit une zone de moindre épaisseur des parois latérales 13. En effet, l'épaisseur e2 au niveau de la jonction du bord 21 et des parois latérales 13 du corps est inférieure à l'épaisseur el de ces parois. En pratique, la somme des épaisseurs e2 et e3, qui est l'épaisseur de la languette élastique 23 à son extrémité libre, est sensiblement égale à l'épaisseur el des parois latérales. Ceci est la condition nécessaire pour que la zone de jonction du corps et du couvercle ne présente aucune protubérance lorsque la boîte est fermée. Le bord 21 comporte à son extrémité libre, une partie frontale 26 dont la section a un profil en forme de coin et une partie arrière dans laquelle est ménagée un dégagement périphérique 27 disposé à la base de la partie frontale et à la jonction du bord et de la partie plus large des parois latérales 13.

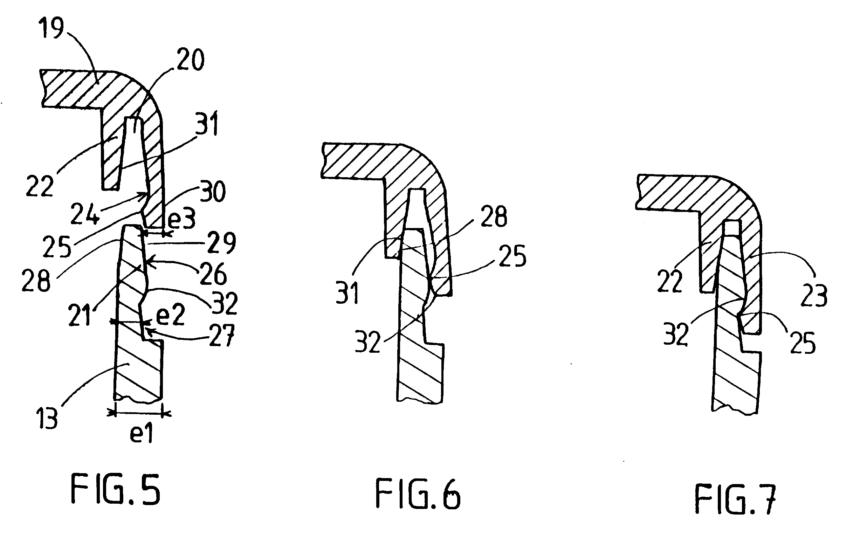

Le profil en coin de la partie frontale 26 du bord 21 est défini par deux faces convergentes 28 et 29. Au moment de la mise en place du couvercle 19, au cours d'une première phase représentée par la figure 5, la face 29, qui est inclinée par rapport à l'axe selon lequel le couvercle est rapproché du corps, prend appui sur une surface inclinée 30 du bossage 25 défini ci-dessus. Le profil en coin du bord 21 repousse la languette élastique 23 vers l'extérieur, au fur et à mesure que les deux éléments (couvercle et corps) se rapprochent.

Au cours d'une deuxième phase représentée par la figure 6, la face 28, qui est également inclinée, entre en contact avec la surface intérieure 31 de la languette intérieure 22. Cette surface est avantageusement inclinée pour coopérer avec la face 28 et assurer un auto-centrage du couvercle.

Au cours d'une troisième phase représentée par la figure 7, le bossage 25 dépasse un renflement 32 de la partie frontale 26 du bord 21 et s'engage dans le dégagement périphérique 27. Ledit renflement 32 qui est en fait constitué par la partie la plus épaisse de cette partie frontale 26 en forme de coin, se loge dans l'évidement intérieur 24 de la languette extérieure 23.

Grâce à cette géométrie de la gorge périphérique et du bord des parois latérales, le couvercle peut être placé facilement sur le corps, grâce notamment à un effet d'auto-centrage. Après la mise en place, le couvercle est ajusté de manière étanche et la boîte ne présente aucune aspérité notoire sur ses parois latérales. Les quatre coins de la languette extérieure 23 comportent avantageusement des zones de dégagement.

## Revendications

1. Boîtier étanche pour une boîte de dérivation, ayant un corps (11) équipé d'un fond (12), de parois latérales (13) et d'un couvercle (19), lesdits couvercle et parois latérales étant équipés d'un dispositif d'emboîtement agencé pour permettre d'assembler le couvercle et le corps, et comportant :
- une gorge périphérique (20) ménagée dans un rebord du couvercle (19) entre une première languette intérieure (22) et une deuxième languette extérieure (23) élastique,
- un bord (21) solidaire des parois latérales (13), et destiné à être engagé dans ladite gorge, l'extrémité dudit bord (21) possèdant une zone de moindre épaisseur ayant une partie frontale (26) conformée en coin,
- et des moyens d'accouplement élastiques,
caractérisé en ce que :
- le bord (21) comprend une partie arrière ménageant un dégagement périphérique (27) disposé à la base de ladite partie frontale (26), et une première face (29) inclinée prenant appui sur une surface (30) inclinée de la deuxième languette (23) élastique, de manière à repousser cette dernière vers l'extérieur lors d'une première phase du mouvement de rapprochement du couvercle (19) et du corps (11),
- la première languette (22) intérieure comporte une surface (31) inclinée coopérant avec une deuxième face (28) conjuguée de la partie frontale (26) pour assurer un auto-centrage du couvercle (19) au cours d'une deuxième phase du mouvement,
- un bossage (25) est agencé sur la paroi interne de la deuxième languette (23) extérieure pour s'engager dans le dégagement périphérique (27) lors d'une troisième phase du mouvement,
- un évidement intérieur (24) est situé sur la deuxième languette (23) entre le bossage (25) et la gorge (20), pour recevoir un renflement (32) situé du côté de la première face (29) de la partie frontale (26) en coin, la deuxième languette extérieure (23) et le dégagement périphérique (27) constituant lesdits moyens d'accouplement élastiques.
- et des zones de dégagement agencées aux quatre coins de la languette extérieure (23).

2. Boîtier selon la revendication 1, caractérisé en ce que la somme de l'épaisseur e2 au niveau de la jonction du bord (21) et des parois latérales (13), et de l'épaisseur e3 de la deuxième languette (23) est sensiblement égale à l'épaisseur el de la paroi du corps 11, telle que la zone de jonction externe du corps (11) et du couvercle (19) soit lisse.

## Patentansprüche

1. Wasserdichtes Gehäuse für eine Abzweigdose, bestehend aus einem Unterteil (11) mit einem Boden (12) und Seitenwänden (13) sowie einem Deckel (19), wobei der genannte Deckel und die genannten Seitenwände eine Steckvorrichtung aufweisen, die so ausgelegt ist, daß ein Zusammensetzen des Deckels und des Unterteils ermöglicht wird, und
- eine umlaufende Nut (20), die in einem Ansatz des Deckels (19) zwischen einer ersten inneren Nutwand (22) und einer zweiten, elastischen äußeren Nutwand (23) ausgebildet ist,
- einen fest mit den Seitenwänden (13) verbundenen Rand (21), der dazu dient, in die genannte Nut einzugreifen, wobei das Ende des genannten Rands (21) einen Bereich mit verjüngtem Querschnitt aufweist, in dem ein keilförmiger, vorderer Abschnitt (26) ausgebildet ist,
- sowie elastische Verbindungsmittel umfaßt,
dadurch gekennzeichnet ist, daß
- der Rand (21) einen hinteren Abschnitt mit einer, unterhalb des genannten vorderen Abschnitts (26) umlaufenden Ausnehmung (27) sowie eine erste geneigte Flanke (29) aufweist, die sich an einer Schräge (30) der zweiten, elastischen Nutwand (23) abstützt, derart daß diese Nutwand im Verlauf einer ersten Phase der Bewegung zur Annäherung des Deckels (19) an das Unterteil (11) nach außen gedrückt wird,
- die erste, innere Nutwand (22) eine Schräge (31) aufweist, die mit einer zweiten, angepaßten Flanke (28) des vorderen Abschnitts (26) zusammenwirkt, um eine Selbstzentrierung des Deckels (19) im Verlauf einer zweiten Phase der Bewegung zu gewährleisten,
- an der Innenseite der zweiten, äußeren Nutwand (23) eine Wulst (25) ausgebildet ist, die dazu dient, im Verlauf einer dritten Phase der Bewegung in die umlaufende Ausnehmung (27) einzugreifen,
- an der zweiten Nutwand (23) zwischen der Wulst (25) und der Nut (20) eine Innenausnehmung (24) zur Aufnahme einer, an der ersten Flanke (29) des keilförmigen vorderen Abschnitts (26) angeordneten Kuppe (32) ausgebildet ist, wobei die zweite, äußere Nutwand (23) und die umlaufende Ausnehmung (27) die genannten elastischen Verbindungsmittel bilden,
- und an den vier Ecken der äußeren Nutwand (23) Ausnehmungsbereiche ausgebildet sind.

2. Gehäuse nach Anspruch 1, dadurch gekennzeichnet, daß die Summe aus der Dicke e2 in Höhe des Übergangs zwischen dem Rand (21) und den Seitenwänden (13) und der Dicke e3 der zweiten Nutwand (23) annähernd der Dicke el der Wandung des Unterteils (11) entspricht, derart daß der äußere Übergangsbereich zwischen dem Unterteil (11) und dem Deckel (19) glatt ist.

## Claims

1. A sealed case for a connecting box, having a body (11) equipped with a base plate (12), side walls (13) and a cover (19), said cover and side walls being equipped with an engagement device arranged to enable the cover and body to be assembled, and comprising :
- a peripheral groove (20) arranged in a lip of the cover (19) between a first internal tab (22) and a flexible second external tab (23),
- an edge (21) securedly united to the side walls (13) and designed to be engaged in said groove, the end of said edge (21) having a zone of lesser thickness having a wedge-shaped front part (26),
- and flexible coupling means,
characterized in that :
- the edge (21) comprises a rear part arranging a peripheral recess (27) located at the base of said front part (26), and an inclined first face (29) bearing on an inclined surface (30) of the flexible second tab (23), so as to push the latter outwards in a first phase of movement of the cover (19) and body (11) towards one another,
- the internal first tab (22) comprises an inclined surface (31) cooperating with a conjugate second face (28) of the front part (26) to perform self-centering of the cover (19) in the course of a second phase of movement,
- a boss (25) is arranged on the internal wall of the external second tab (23) to engage in the peripheral recess (27) when a third phase of movement takes place,
- an internal recess (24) is situated on the second tab (23) between the boss (25) and the groove (20) to receive a swelling (32) situated on the same side as the first face (29) of the wedge-shaped front part (26), the external second tab (23) and the peripheral recess (27) forming said flexible coupling means,
- and clearance zones arranged at the four corners of the external tab (23).

2. The case according to claim 1, characterized in that the sum of the thickness e2 at the level of the junction of the edge (21) and of the side walls (13), and of the thickness e3 of the flexible tab (23) is appreciably equal to the thickness e1 of the wall of the body (11), so that the external junction zone of the body (11) and cover (19) is smooth.
